# EUROPEAN PATENT APPLICATION

(11) **EP 2 011 663 A1**
(43) Date of publication of application: **07.01.2009**
(21) Application number: 07741551.1
(22) Date of filing: 12.04.2007
(51) Int. Cl.: B41M 5/337

(54) **HEAT-SENSITIVE PRINTING LAYER AND OPTICAL RECORDING MEDIUM USING THE HEAT-SENSITIVE PRINTING LAYER**

(30) Priority: 13.04.2006 JP 2006110394
(71) Applicant: Mitsubishi Kagaku Media Co., Ltd., Tokyo 108-8415 (JP)
(72) Inventor: AKIYAMA, Masayoshi, Tokyo 108-8415 (JP); TAKESHIMA, Hideharu, Tokyo 108-8415 (JP)
(74) Representative: Vossius & Partner
(86) International application number: PCT/JP2007/058115
(87) International publication number: WO 2007/119802

(57) **Abstract**

There are provided a thermal printing layer capable of thermal printing with a thermal head, and an optical recording medium. It is a thermal printing layer capable of thermal printing with a thermal head, which comprises a heat-sensitive color development material, a developer, and a curable resin, wherein the curable resin has an elastic modulus of 1000 Pa or more at 30°C and an elastic modulus of 1100 Pa or less at 150°C. Also, it relates to an optical recording medium comprising the thermal printing layer and a recording/reading functional layer for performing recording or reading with a light, wherein the optical recording medium has the thermal printing layer on a side of the recording/reading functional layer in which the side is opposite to a side on which the light enters.

## Description

### Technical Field

The present invention relates to a thermal printing layer. More specifically, it relates to a thermal printing layer capable of being suitably used for an optical recording medium.

### Background Art

In optical recording media including recordable media (Write Once Media) such as CD-R and DVD-R, rewritable media (ReWritable Media) such as CD-RW and rewritable DVD, and the like (hereinafter sometimes referred to as "optical disks"), one side is a side on which a light for recording/reading information enters and another side is used as a printing/displaying side on which a title and the like are printed.
In the above optical disks, the above printing/displaying side is frequently used for recording a content of information recorded on the optical disks. Specifically, the title of a movie or the like recorded on a DVD-R is described on the printing/displaying side of the DVD-R.

As one method for printing the title, there is a method that a thermal printing layer is formed on the above printing/displaying side wherein an infrared absorbent, a leuco dye, and a developer are dissolved/dispersed in an ultraviolet curable resin (see e.g., Patent Document 1). In the method, the infrared absorbent is heated by irradiating the above thermal printing layer with a laser light (780 nm) and further the leuco dye is reacted with the developer by an action of the heat to develop color of the thermal printing layer (to achieve printing).

In the printing method described in the above Patent Document 1, color development (printing) of the thermal printing layer is achieved with a laser light. However, in the method with a laser light, since printing is performed by scanning a spot of the laser light on a printing surface, it takes a long time to print all the printing surface.
Thus, instead of the above printing method with a laser light, a method of performing thermal printing with a thermal head has been proposed (see, e.g., FIG. 2 of Patent Document 2). According to the method, it is possible to perform printing all over the printing surface by on-round scanning on the thermal printing layer of an optical recording medium with a thermal head. Namely, a rapid print formation is possible.

Patent Document 1: U. S. Patent Application Laid-Open No. 2004/0146812
Patent Document 2: JP-A-2000-155989

### Disclosure of the Invention

### Problems that the Invention is to Solve

However, in the case where thermal printing with a thermal head is performed, since the thermal head comes into contact with a surface of the thermal printing layer when printing, a good scratch resistance is desired for the thermal printing layer. Moreover, in order to enable more rapid printing, it is desired that the thermal printing layer rapidly develops color (good color development sensitivity) in response to heat imparted by the thermal head. Furthermore, a color-developed state of the thermal printing layer is desirably maintained for a long period of time (good print stability).
From the viewpoint of achievement of all of the scratch resistance (mechanical property), the color development sensitivity (printing property), and the printing stability at a high level, the printing layer described in the above Patent Document 1 still has room for improvement. Moreover, in the above Patent Document 2, there is no specific description on a composition of the thermal printing layer.

The present inventors have investigated a possibility of applying thermal printing with a thermal head, which achieves a rapid printing rate, to an optical recording medium comprising a thermal printing layer which uses a curable resin (more specifically, an ultraviolet curable resin), a heat-sensitive color development material, and a developer.

The invention has been devised in consideration of the above circumstances.
Namely, a main object of the invention is to provide a thermal printing layer capable of thermal printing with a thermal head and excellent in scratch resistance.
Moreover, another object of the invention is to provide an optical recording medium using a curable resin, capable of thermal printing with a thermal head, and having a thermal printing layer excellent in scratch resistance.

### Means for Solving the Problems

As a result of the extensive studies in consideration of the above objects, the present inventors have found that a thermal printing layer capable of satisfying the mechanical property, printing property, and printing stability at a high level is obtained by increasing elastic modulus at 30°C of the curable resin to be used for the thermal printing layer and meanwhile lowering the elastic modulus at 150°C. Thus, they have accomplished the invention.
According to the invention, there is provided a thermal printing layer capable of thermal printing with a thermal head, which comprises a heat-sensitive color development material, a developer, and a curable resin, wherein the curable resin has an elastic modulus of 1000 Pa or more at 30°C and an elastic modulus of 1100 Pa or less at 150°C.

The elastic modulus of the curable resin at 30°C is preferably 2000 Pa or more. Moreover, a glass transition temperature (Tg) of the curable resin is preferably 60°C or higher. Furthermore, the thermal printing layer preferably further comprises a sensitizer. Additionally, the curable resin is preferably an ultraviolet curable resin.

In addition, according to the invention, there is provided an optical recording medium which comprises any one of the above thermal printing layers and a recording/reading functional layer where recording or reading is performed with a light, wherein the optical recording medium has the thermal printing layer on a side of the recording/reading functional layer in which the side is opposite to a side on which the light enters.

From the viewpoint of improving a printing property (printing quality) at thermal printing, it is preferred to accelerate contact of the heat-sensitive color development material with the developer to enhance color development sensitivity. From such a viewpoint, in the invention, the elastic modulus at 150°C of the curable resin to be used for the thermal printing layer is lowered. It is considered that softening of the curable resin is thereby accelerated in a temperature range that the thermal printing layer at thermal printing reaches and the contact of the heat-sensitive color development material with the developer is accelerated, as a result, the color development sensitivity (printing property) being improved. In this regard, the thermal printing with a thermal head and printing with a laser light are the same.

On the other hand, in the case of using a thermal head, the thermal head may slide on the thermal printing layer at thermal printing. Therefore, the thermal printing layer has easily been scratched or the thermal head becomes difficult to slide at the printing with the thermal head unless a surface hardness of the thermal printing layer is secured. From such a viewpoint, in the invention, the elastic modulus of the curable resin at 30°C is made relatively high.

However, the elastic modulus of the curable resin at 150°C commonly increases as the increase in elastic modulus thereof at 30°C. Contrarily, the elastic modulus of the curable resin at 30°C commonly decreases as the decrease in elastic modulus thereof at 150°C. Therefore, the suppression of the elastic modulus at 150°C with increasing the elastic modulus at 30°C requires to control the two conflicting factors in a balanced manner and is not easy. In the invention, as a result of extensive studies, it becomes possible to satisfy the above conflicting two factors at the same time by devising a molecular structure of the curable resin or the like.

### Advantage of the Invention

According to the invention, there are provided a thermal printing layer capable of thermal printing with a thermal head and excellent in scratch resistance, and an optical recording medium comprising the thermal printing layer.

### Best Mode for Carrying Out the Invention

The following will explain the best mode for carrying out the invention (hereinafter, an embodiment of the invention) in detail. The invention is not limited to the following embodiment of the invention and can be carried out with various modifications within the gist thereof. Moreover, the figures used only illustrate the present embodiment and do not represent an actual size.

### (1) Thermal printing layer

In the present embodiment, the thermal printing layer comprise a heat-sensitive color development material, a developer, and a curable resin.

### (Heat-sensitive color development material)

The heat-sensitive color development material is not particularly limited so far as it is capable of developing color by a reaction with a developer but an electron-donating color development compound is preferred. Specifically, there may be mentioned triarylmethane-based compounds, vinylphthalide-based compounds, diarylmethane-based compounds, rhodamine-lactam-based compounds, thiazine-based compounds, fluoran-based compounds, pyridine-based compounds, spiro-based compounds, fluorene-based compounds, and the like. Preferably, leuco dyes such as fluoran-based compounds and phthalide compounds may be mentioned.
As the fluoran compounds, there may be, for example, mentioned 3-diethylamino-7-chloroanilinofluoran, 3-diethylamino-6-methyl-7-anilinofluoran, 3-dibutylamino-6-methyl-7-anilinofluoran, 3-ethyl(ethoxypropyl)-6-methyl-7-anilinofluoran, 3-diethylamino-6-methyl-7-(2,4-xylidino)fluoran, 3-diethylamino-6-methyl-7-(m-toluidino)fluoran, 3-diethylamino-7,8-benzofluoran, 3-diethylamino-6-methyl-7-(2,6-xylidino) fluoran, and the like.

On the other hand, as the phthalide compounds, there may be, for example, mentioned Crystal Violet lactone, 3-(4-diethylamino-2-ethoxyphenyl)-3-(1-ethyl-2-methylindol-3-yl)phthalide, 3,3-bis(1-n-butyl-2-methylindol-3-yl)phthalide, and the like.
Needless to say, with regard to the heat-sensitive color development material, two or more materials may be used in an arbitrary ratio according to need.

The heat-sensitive color development material is contained in the thermal printing layer in an amount of usually 3% by weight or more, preferably 5% by weight or more, more preferably 10% by weight or more. This is for the purpose of easily securing sensitivity at thermal printing.
On the other hand, the heat-sensitive color development material is contained in the heat-sensitive development layer in an amount of usually 50% by weight or less, preferably 45% by weight or less, more preferably 40% by weight or less. This is for the purpose of easily improving industrial productivity through adjustment of a viscosity of an applying solution and the like.

### (Developer)

As the developer, an acidic substance commonly used for heat-sensitive papers, i.e., an electron-accepting compound is used. As the developer, for example, phenol derivatives and aromatic carboxylic acid derivatives can be used.
Preferred compounds of the phenol derivatives are compounds having at least one phenolic hydroxyl group. More preferred are phenol derivatives unsubstituted on both or one ortho-position(s) of the phenolic hydroxyl group.

As the phenol derivatives, there may be, for example, phenol, p-t-butylphenol, p-phenylphenol, 1-naphthol, 2-naphthol, p-hydroxyacetophenone, 2'-dihydroxybiphenyl, 4'-isopropylidenediphenol, 4'-isopropylidenediphenol, 4'-isopropylidenebis(2-t-butylphenol), 4'-isopropylidenebis(2-chlorophenol), 4'-cyclohexylidenediphenol, 2-bis(4-hydroxyphenyl)butane, 2-bis(4-hydroxyphenyl)pentane, 2-bis(4-hydroxyphenyl)hexane, diphenolacetic acid methyl ester, bis(4-hydroxyphenyl) sulfone, bis(3-allyl-4-hydroxyphenyl) sulfone, 4-hydroxy-4'-methyldiphenyl sulfone, 4-hydroxy-4'-isopropyloxydiphenyl sulfone, 4-hydroxyphenyl (4'-n-propoxyphenyl) sulfone, bis(4-hydroxyphenyl) sulfide, 4'-thiobis(2-t-butyl-5-methyl)phenol, 7-bis(4-hydroxyphenylthio)-5-dioxyheptane, novolak-type phenol resins, and the like.

On the other hand, as the aromatic carboxylic acid derivatives, there may be, for example, benzoic acid, p-t-butylbenzoic acid, p-hydroxybenzoic acid, p-hydroxybenzoic acid methyl ester, p-hydroxybenzoic acid isopropyl ester, p-hydroxybenzoic acid benzyl ester, gallic acid lauryl ester, gallic acid stearyl ester, salicylanilide, 5-chlorosalicylanilide, metal salts such as zinc salt of 5-t-butylsalicyl acid, metal salts such as zinc salt of hydroxynaphthoic acid, and the like.
Needless to say, with regard to the developer, two or more materials may be used in an arbitrary ratio according to need.

The developer is contained in the thermal printing layer in an amount of usually 3% by weight or more, preferably 5% by weight or more, more preferably 10% by weight or more. Thereby, sensitivity at thermal printing is easily secured.
On the other hand, the developer is contained in the thermal printing layer in an amount of usually 50% by weight or less, preferably 45% by weight or less, more preferably 40% by weight or less. This is for the purpose of easily securing industrial productivity, e.g., easily securing a viscosity of an applying solution.

### (Curable resin)

In the invention, a curable resin is contained in the thermal printing layer. By using the curable resin, a predetermined viscosity can be imparted to an ink which forms the thermal printing layer. Thus, formation of the thermal printing layer can be achieved by screen printing. As a result, an amount of the ink consumed is decreased and a drying step can be made unnecessary, so that productivity of the thermal printing layer can be improved.
As the curable resin, there is used one having an elastic modulus of 1000 Pa or more at 30°C and an elastic modulus of 1100 Pa or less at 150°C. As the curable resin which easily satisfies the above elastic modulus, a heat-curable resin material, a photo-curable resin material, and the like may be mentioned. When the productivity is considered, use of the photo-curable resin material is preferred. In the invention, the elastic modulus of the curable resin means elastic modulus of the resin after cured.

As such a photo-curable resin material, use of an ultraviolet curable resin is preferred when the productivity is considered. As the ultraviolet curable resin, a radical-type (radical polymerizable) ultraviolet curable resin and a cation polymerizable ultraviolet curable resin are mentioned and either of them can be used.

As the radical-type ultraviolet curable resin, a resin formed by polymerizing a composition comprising an ultraviolet curable compound and a photopolymerization initiator may be mentioned. As the ultraviolet curable compound, for example, a monofunctional (meth)acrylate or a polyfunctional (meth)acrylate may be mentioned as a polymerizable monomer component. They can be used singly or two or more thereof may be used in combination. Herein, an acrylate and a methacrylate are collectively referred to as a (meth)acrylate. As the photopolymerization initiator, a photo-cleavage type or hydrogen-extracting type one is mentioned. In the invention, it is preferred that an uncured ultraviolet curable compound comprising a radical polymerizable acrylic ester as a main component is used and cured to obtain the thermal printing layer.

On the other hand, as the cationic ultraviolet curable resin, there may be, for example, mentioned epoxy resins comprising a cation-polymerization type photopolymerization initiator. As the epoxy resin, there may be, for example, mentioned bisphenol A-epichlorohydrin type, alicyclic type epoxy, long-chain aliphatic type, brominated epoxy resin, glycidyl ester type, glycidyl ether type, heterocyclic type, and the like compounds. As the epoxy resin, it is preferred to use one having a smaller content of free chlorine and a chlorine ion. The amount of chlorine is preferably 1% by weight or less, more preferably 0.5% by weight or less. As the cationic polymerization-type photopolymerization initiator, there may be mentioned sulfonium salts, iodonium salts, diazoniumu salts, and the like.

In general, a photo-curable resin material comprises a mixture of an oligomer that is a resin main component forming a resin skeleton, a monomer as a reactive diluent, a photopolymerization initiator, an additive, and the like. For the thermal printing layer in the present embodiment, properties such as large hardness at room temperature, small hardness at high temperature, small shrinkage at curing, and small change with time are usually required.

From the viewpoint of easy achievement of surface hardness of the thermal printing layer and easy achievement of stability of printing with time, the elastic modulus of the curable resin at 30°C is 1000 Pa or more, preferably 1500 Pa or more, more preferably 2000 Pa or more, further preferably 3000 Pa or more.
Moreover, from the above viewpoint, higher elastic modulus of the curable resin at 30°C is more preferred. However, realistically, an upper limit of the elastic modulus at 30°C is usually about 5000 Pa.

On the other hand, the elastic modulus of the curable resin at 150°C is 1100 Pa or less, preferably 1000 Pa or less, more preferably 500 Pa or less, further preferably 300 Pa or less, particularly preferably 100 Pa or less. When the elastic modulus falls within the range, the color development sensitivity at thermal printing is easily enhanced and the printing property is easily improved.
Moreover, from the viewpoint of achieving color development sensitivity, smaller elastic modulus of the curable resin at 150°C is more preferred. However, realistically, the lower limit of the elastic modulus at 150°C is usually about 5 Pa.
Furthermore, a difference between the elastic modulus of the curable resin at 30°C and the elastic modulus thereof at 150°C ([elastic modulus at 30°C] - [elastic modulus at 150°C]) is desirably 1000 Pa or more, preferably 1800 Pa or more, more preferably 2300 Pa or more. The difference between the elastic modulus of the curable resin at 30°C and the elastic modulus at 150°C is not limited but usually about 4000 Pa.
The elastic modulus in the present embodiment is a dynamic elastic modulus measured on a dynamic viscoelasticity measuring machine commonly used.

Specifically, the control of the elastic modulus of the curable resin can be effected by controlling the structures of main chain and side chain of the curable resin. The following will explain one method for increasing the elastic modulus at 30°C and one method for suppressing the elastic modulus at 150°C to a small value with illustrating as an example the case of using an ultraviolet curable resin as the curable resin.

### (Method for obtaining ultraviolet curable resin having large elastic modulus at 30°C)

For increasing the elastic modulus of the ultraviolet curable resin at 30°C, it is sufficient to restrict Brownian motion of a crosslinked structure obtained by curing. Namely, it is sufficient to increase a crosslinking density. More specifically, in the case of forming the ultraviolet curable resin using acrylic monomers, an ultraviolet curable resin having high elastic modulus can be obtained, for example, by performing the following (a) to (c).

(a) To use an acrylic monomer which achieves a high crosslinking density.
(b) To use an acrylic monomer having a rigid structure in the crosslinked structure.
(c) To use an acrylic monomer which achieves a high crosslinking density and an acrylic monomer having a rigid structure in the crosslinked structure in combination.

As the acrylic monomer which achieves a high crosslinking density, there may be mentioned polyfunctional acrylic monomers having a small molecular weight per one acryloyl group (polyfunctional (meth)acrylates). Herein, an acrylate and a methacrylate are collectively referred to as a (meth)acrylate.

As the polyfunctional (meth)acrylates, there may be, for example, mentioned di(meth)acrylates of 1,3-butylene glycol, 1,4-butanediol, 1,5-pentanediol, 3-methyl-1,5-pentanediol, 1,6-hexanediol, neopentyl glycol, 1,8-octanediol, 1,9-nonanediol, tricyclodecanedimethanol, ethylene glycol, polyethylene glycol, propylene glycol, dipropylene glycol, tripropylene glycol, and polypropylene glycol, di(meth)acrylates of tris(2-hydroxyethyl)isocyanurate, and the like.

Moreover, there may be mentioned di(meth)acrylates of diols obtained by adding 4 mol or more of ethylene oxide or propylene oxide to 1 mol of neopentyl glycol, di(meth)acrylates of diols obtained by adding 2 mol of ethylene oxide or propylene oxide to 1 mol of bisphenol A, di(meth)acrylates of diols obtained by adding 4 mol or more of ethylene oxide or propylene oxide to 1 mol of bisphenol A, ethylene oxide-modified phosphoric acid (meth)acrylates, ethylene oxide-modified alkylated phosphoric acid (meth)acrylates, trimethylolpropnane tri(meth)acrylates, di- or tri-(meth)acrylates of triols obtained by adding 3 mol or more of ethylene oxide or propylene oxide to 1 mol of trimethylolpropane, pentaerythritol tri(meth)acrylate, pentaerythritol tetra(meth)acrylate, tri- or tetra-(meth)acrylates of tetra alcohols obtained by adding 4 mol or more of ethylene oxide or propylene oxide to 1 mol of pentaerythritol, poly(meth)acrylates of dipentaerythritol (e.g., dipentaerythritol penta(meth)acrylate or dipentaerythritol hexa(meth)acrylate), penta- or hexa-(meth)acrylates of hexa alcohols obtained by adding 6 mol or more of ethylene oxide or propylene oxide to 1 mol of dipentaerythritol, and the like.

Of these, in view of ability of increasing the elastic modulus, preferred are the following materials. Namely, there may be mentioned polyfunctional (meth)acrylates such as trimethylolpropane tri(meth)acrylate, tri(meth)acrylates of triols obtained by adding 3 mol or more of ethylene oxide or propylene oxide to 1 mol of trimethylolpropane, pentaerythritol tri(meth)acrylate, pentaerythritol tetra(meth)acrylate, tri- or tetra(meth)acrylates of tetra alcohols obtained by adding 4 mol or more of ethylene oxide or propylene oxide to 1 mol of pentaerythritol, dipentaerythritol penta(meth)acrylate, dipentaerythritol hexa(meth)acrylate, penta- or hexa(meth)acrylates of hexa alcohols obtained by adding 6 mol or more of ethylene oxide or propylene oxide to 1 mol of dipentaerythritol; and the like.

In view of increasing the elastic modulus, further preferred are trimethylolpropane tri(meth)acrylate, pentaerythritol tri(meth)acrylate, pentaerythritol tetra(meth)acrylate, dipentaerythritol penta(meth)acrylate, and dipentaerythritol hexa (meth) acrylate.

Next, as the acrylic monomer having a rigid structure in the crosslinked structure, an acrylic monomer having a rigid cyclic structure may be mentioned.
As specific examples of such an acrylic monomer, there may be mentioned norbornanedimethanol diacrylate, norbornanediethanol di(meth)acrylate, di(meth)acrylates of diols obtained by adding 2 mol of ethylene oxide or propylene oxide to 1 mol of norbornanedimethanol, tricyclodecanedimethanol di(meth)acrylate, tricyclodecanediethanol di(meth)acrylate, di(meth)acrylates of diols obtained by adding 2 mol of ethylene oxide or propylene oxide to 1 mol of tricyclodecanedimethanol, pentacyclopentadecanedimethanol di(meth)acrylate, pentacyclopentadecanediethanol di(meth) acrylate, di(meth)acrylates of diols obtained by adding 2 mol of ethylene oxide or propylene oxide to 1 mol of pentacyclopentadecanedimethanol, di(meth)acrylates of diols obtained by adding 2 mol of ethylene oxide or propylene oxide to 1 mol of pentacyclopentadecanediethanol, and the like.

Of these, from the viewpoint of ability of increasing the elastic modulus, preferred are tricyclodecanedimethanol di(meth)acrylate, tricyclodecanediethanol di(meth)acrylate, and pentacyclopentadecanedimethanol di(meth)acrylate.

In addition, there may be mentioned bis(2-acryloyloxyethyl)hydroxyethyl isocyanurate, bis(2-acryloyloxypropyl)hydroxypropyl isocyanurate, bis(2-acryloyloxybutyl)hydroxybutyl isocyanurate, bis(2-methacryloyloxyethyl)hydroxyethyl isocyanurate, bis(2-methacryloyloxypropyl)hydroxypropyl isocyanurate, bis(2-methacryloyloxybutyl)hydroxybutyl isocyanurate, tris(2-acryloyloxyethyl) isocyanurate, tris(2-acryloyloxypropyl) isocyanurate, tris(2-acryloyloxybutyl) isocyanurate, tris(2-methacryloyloxyethyl) isocyanurate, tris(2-methacryloyloxypropyl) isocyanurate, tris(2-methacryloyloxybutyl) isocyanurate, and the like.
From the viewpoint of ability of increasing the elastic modulus, particularly preferred are tricyclodecanedimethanol di(meth)acrylate and tricyclodecanediethanol di(meth)acrylate.

In the case where the acrylic monomer which achieves a high crosslinking density and the acrylic monomer having a rigid structure in the crosslinked structure are used in combination, it is sufficient to do as follows.
Namely, one or more of the specific compounds of the acrylic monomer which achieves a high crosslinking density as described above are selected. Furthermore, one or more of the specific compounds of the acrylic monomer having a rigid structure in the crosslinked structure as described above are selected. These compounds may be used in combination in an arbitrary ratio according to the desired elastic modulus.

### (Method for obtaining ultraviolet curable resin having small elastic modulus at 150°C)

The following will describe a specific method in the case of forming a resin layer using an ultraviolet curable resin (more specifically, radical-based ultraviolet curable resin).
For lowering the elastic modulus of the ultraviolet curable resin at 150°C, it is sufficient to decrease density change at curing. Specifically, in the case of forming the ultraviolet curable resin using acrylic monomers, there may be mentioned a method of combining an acrylic oligomer having a flexible structure and a monofunctional acrylic monomer from the viewpoint of large molecular weight per one acryloyl group and molecular mobility. A content ratio of the acrylic oligomer having a flexible structure and the monofunctional acrylic monomer may be suitably regulated in order to obtain desirable elastic modulus.

As specific examples of the acrylic oligomer having a flexible structure, there may be mentioned acrylic oligomers such as urethane(meth)acrylates comprising polyether or polyester diol and polyalkylene glycol diacrylates.

As specific examples of the monofunctional acrylic monomer, there may be mentioned ethyl (meth)acrylate, butyl (meth)acrylate, 2-ethylhexyl (meth)acrylate, nonyl (meth)acrylate, tridecyl (meth)acrylate, hexadecyl (meth)acrylate, octadecyl (meth)acrylate, isoamyl (meth)acrylate, isodecyl (meth)acrylate, isostearyl (meth)acrylate, 2-hydroxyethyl (meth)acrylate, 3-chloro-2-hydroxypropyl (meth)acrylate, methoxyethyl (meth)acrylate, butoxyethyl (meth)acrylate, nonylphenoxyethyl (meth)acrylate, 2-hydroxy-3-phenoxypropyl (meth)acrylate, and the like.

### (Method for suppressing elastic modulus at 150°C to low value with increasing elastic modulus at 30°C)

For increasing the elastic modulus, it is preferred to restrict Brownian motion of the crosslinked structure obtained by curing. Specifically, it is preferred to increase a crosslinking density. On the other hand, for decreasing the elastic modulus, it is preferred to decrease the restriction of Brownian motion of the crosslinked structure obtained by curing. Specifically, it is suitable to decrease density change at curing.

The increase in the elastic modulus at 30°C and the suppression of the elastic modulus at 150°C are conflicting problems as mentioned above but in the present embodiment, it is possible to obtain an ultraviolet curable resin having a crosslinked structure which satisfies these conflicting two factors in a well-balanced manner. As a specific method thereof, when acrylic monomers are used as an example, it is sufficient to obtain a crosslinked structure with regulating ratios of the following acrylic monomers (a) to (c). As more specific combinations, there may be mentioned a combination of (a) and (c), a combination of (b) and (c), and a combination of (a) to (c).

(a) An acrylic monomer which achieves a high crosslinking density (polyfunctional acrylic monomer having a small molecular weight per one acryloyl group).
(b) An acrylic monomer having a rigid structure in the crosslinked structure.
(c) An acrylic monomer which achieves a small crosslinking density (to combine an acrylic oligomer having a large molecular weight per acryloyl group and a flexible structure and a monofunctional acrylic monomer).
Herein, these acrylic monomers (a) to (c) are as described above.

From the viewpoint of controlling the elastic modulus of the curable resin in the present embodiment, it is suitable to select glass transition temperature (Tg) as an index.
The glass transition temperature of the curable resin is preferably 60°C or higher, more preferably 70°C or higher, further preferably 80°C or higher. When the temperature falls within the range, it becomes easy to increase the elastic modulus at 30°C.
On the other hand, the glass transition temperature of the curable resin is preferably 180°C or lower, more preferably 170°C or lower, further preferably 150°C or lower, particularly preferably 130°C or lower, most preferably 100°C or lower. When the temperature falls within the range, it becomes easy to suppress the elastic modulus at 150°C to a low value.

In the present embodiment, the glass transition temperature can be usually measured by Differential Scanning Calorimetry (DSC), Differential Thermal Analysis (DTA), Thermomechanical Analysis (TMA), Dilatometry, or Dielectric relaxation. Preferably, Differential Scanning Calorimetry (DSC) or Differential Thermal Analysis (DTA) is employed. In the invention, the glass transition temperature of the curable resin means a glass transition temperature of the resin after curing.

Moreover, also in the case where monomers other than acrylic monomers are used as the ultraviolet curable resin, the curable resin in the invention can be attained by suitably selecting a monomer from the viewpoint of a monomer which achieves a high crosslinking density, a monomer having a rigid structure in the crosslinked structure, and a monomer which achieves a small crosslinking density as mentioned above and using them.
Furthermore, needless to say, a monomer other than the aforementioned monomer which achieves a high crosslinking density, monomer having a rigid structure in the crosslinked structure, and monomer which achieves a small crosslinking density can be arbitrarily selected and used in combination within the range where the advantage of the invention is not impaired.
Moreover, for the purpose of controlling the elastic modulus of the curable resin, needless to say, a conventionally known co-crosslinking agent may be suitably mixed into a composition which forms the curable resin.
A lower limit of the curable resin content in the thermal printing layer is not limited but desirably, it is usually 10% by weight or more, preferably 30% by weight or more, more preferably 50% by weight or more. This is for the purpose of preventing leakage of the heat-sensitive color development material and the developer from the thermal printing layer and suppressing bruises by the thermal head.
Moreover, an upper limit of the curable resin content in the thermal printing layer is not limited but desirably, it is usually 95% by weight or less, preferably 90% by weight or less, more preferably 85% by weight or less. This is for the purpose of achieving suitable contact of the heat-sensitive color development material with the developer in the curable resin at thermal printing.

### (Sensitizer)

It is preferred to incorporate a sensitizer into the thermal printing layer in the present embodiment. The sensitizer is usually added for the purpose of lowering a color-development initiating temperature to enhance the sensitivity of the thermal printing layer. For the sensitizer, a relatively low melting point and good compatibility with the heat-sensitive color development material and the developer are required. When the melting point is too low, heat resistance of a non-imaging part is impaired in some cases, so that generally a compound having a melting point of 80°C to 120°C is employed. As such a sensitizer, specifically a naphthol derivative can be used.

A preferred compound of naphthol derivatives is represented by the following general formula (I).

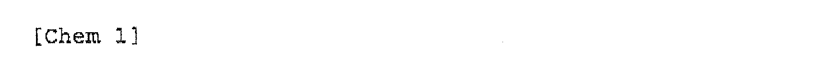

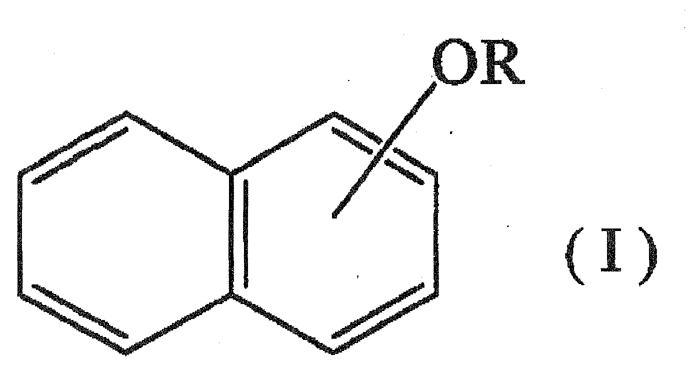

In the above formula, R represents an alkyl group, an aralkyl group, an aryl group, an alkylcarbonyl group, an arylcarbonyl group, an alkylsulfonyl group, or an arylsulfonyl group. The substituent represented by R in the above formula may further have substituent(s). Among the substituents represented by R in the above general formula, an alkyl group having 4 to 20 carbon atoms, an aralkyl group having 6 to 24 carbon atoms, an alkylcarbonyl group having 2 to 20 carbon atoms, and an arylcarbonyl group having 7 to 20 carbon atoms are more preferred.
Moreover, in the above general formula, the naphthalene ring may further have substituent(s). As preferable examples of the substituent, there may be mentioned an alkyl group, an aralkyl group, a halogen atom, a hydroxy group, an alkoxy group, an aryloxy group, an alkylcarbonyloxy group, an arylcarbonyloxy group, an alkoxycarbonyl group, an aryloxycarbonyl group, a carbamoyl group, a sulfamoyl group, and the like.

In the above naphthol derivatives, as the substituent of the naphthalene ring, a halogen atom, an alkyl group having 1 to 10 carbon atoms, an alkoxycarbonyl group having 2 to 20 carbon atoms, an aryloxycarbonyl group having 7 to 20 carbon atoms, and a substituted carbamoyl group having 2 to 25 carbon atoms are more preferred.
Moreover, of the above naphthol derivatives, those having a melting point ranging from 40°C to 150°C are preferred and particularly, those having a melting point ranging from 50°C to 120°C are preferred.

As specific examples of the naphthol derivatives represented by the general formula (I), there may be, for example, mentioned 1-benzyloxynaphthalene, 2-benzyloxynaphthalene, 2-p-chlorobenzyloxynaphthalene, 2-p-isopropylbenzyloxynaphthalene, 2-dodecyloxynaphthalene, 2-decanoyloxynaphthalene, 2-myristoyloxynaphthalene, 2-p-t-butylbenzoyloxynaphthalene, 2-benzoyloxynaphthalene, 2-benzyloxy-3-N-(3-dodecyloxypropyl)carbamoylnaphthalene, 2-benzoyloxy-3-N-octylcarbamoylnaphthalene, 2-benzyloxy-3- dodecyloxycarbonylnaphthalene, 2-benzyloxy-3-p-t-butylphenoxycarbonylnaphthalene, and the like.

An additive amount of the sensitizer relative to the heat-sensitive color development material (e.g., leuco dye) is usually 5 parts by weight or more, preferably 30 parts by weight or more, more preferably 50 parts by weight or more based on 100 parts by weight of the heat-sensitive color development material. When the amount is within the above range, a sensitivity-enhancing effect is easily obtained. On the other hand, the additive amount of the sensitizer is usually 500 parts by weight or less, preferably 300 parts by weight or less, more preferably 200 parts by weight or less, particularly preferably 100 parts by weight or less based on 100 parts by weight of the heat-sensitive color development material. When the amount is within the above range, a material cost is apt to be effectively suppressed. In the case where two or more sensitizers are used in combination, it is sufficient that the total amount falls within the above range.

### (Other additives)

The thermal printing layer may further comprise a wax for the purpose of improvement in color development ability, enhancement in recording sensitivity, and the like. As such a wax, there may be, for example, mentioned 1,2-di(3-methylphenoxy)ethane, 1,2-diphenoxyethane, p-benzylbiphenyl, naphthyl benzyl ether, benzyl-4-methylthiophenyl ether, oxalic acid benzyl ester, oxalic acid di-p-methylbenzyl ester, oxalic acid di-p-chlorobenzyl ester, terephthalic acid dibutyl ester, terephthalic acid dibenzyl ester, stearic acid amide, methylenebisstearic acid amide, dibenzyl terephthalate, benzyl p-benzyloxybenzoate, 2-naphthyl benzyl ether, p-tolyl biphenyl ether, di(p-methoxyphenoxyethyl) ether, 1,2-di(4-methylphenoxy)ethane, 1,2-di(4-chlorophenoxy)ethane, 1-(4-methylphenoxy)-2-(3-methylphenoxy)ethane, p-methylthiophenyl benzyl ether, 1,4-di(phenylthio)butane, p-acetotoluimide, p-acetophenetidide, N-acetoacetyl-p-toluidine, di(β-biphenylethoxy)benzene, 2-(2'-hydroxy-5'- methylphenyl)benzotriazole, and the like. In view of the recording sensitivity by heat-sensitive recording, a wax having a melting point of 120°C or lower is preferred. Needless to say, two or more of the above waxes may be used in a predetermined ratio in combination according to need.

To the thermal printing layer, other than the aforementioned materials, various additives can be used in combination according to need. For example, in order to improve light resistance of the thermal printing layer, it is preferred to use a light stabilizer. As the light stabilizer, there may be mentioned an ultraviolet absorbent, an antioxidant, an antiaging agent, a quencher of singlet oxygen, and the like.

As the ultraviolet absorbent, there may be, for example, benzophenone-based ultraviolet absorbents such as 2,4-dihydroxybenzophenone, 2-hydroxy-4-methoxybenzophenone, 2-hydroxy-4-n-octoxybenzophenone, 4-dodecyloxy-2-hydroxybenzophenone, 2,2'-dihydroxy-4-methoxybenzophenone, 2,2'-dihydroxy-4,4'-dimethoxybenzophenone, 2,2',1,4'-tetrahydroxybenzophenone, 2-hydroxy-4-methoxy-2'-carboxybenzophenone, 2-hydroxy-4-oxybenzylbenzophenone, 2-hydroxy-4-chlorobenzophenone, 2-hydroxy-5₋chlorobenzophenone, 2-hydroxy-4-methoxy-4'-methylbenzophenone, 2-hydroxy-4-n-heptoxybenzophenone, 2-hydroxy-3,6-dichloro-4-methoxybenzophenone, 2-hydroxy-3,6-dichloro-4-ethoxybenzophenone, and 2-hydroxyl-4-(2-hydroxy-3-methylacryloxy)propoxybenzophenone.

As the other ultraviolet absorbents, there may be, for example, benzotriazole-based ultraviolet absorbents such as 2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-4'-octoxy)benzotriazole, 2-(2'-hydroxy-3',5'-di-tert-butylphenyl)5-chlorobenzotriazole, 2-(3'-tert-butyl-2'-hydroxy-5'-methylphenyl)5-chlorobenzotriazole, and 2-(2'-hydroxy-5-ethoxyphenyl)benzotriazole; salicylic acid phenyl ester-based ultraviolet absorbents such as phenyl salicylate, p-octylphenyl salicylate, p-tert-butylphenyl salicylate, carboxylphenyl salicylate, methylphenyl salicylate, and dodecylphenyl salicylate; or ester-based ultraviolet absorbents such as p-methoxybenzylidenemalonic acid dimethyl eater, 2-ethylhexyl-2-cyano-3,3'-diphenylacrylate, and ethyl-2-cyano-3,3'-diphenylacrylate; 3,5-di-tert-butyl-p-hydroxybenzoic acid, resorcinol monobenzoate which rearranges with an ultraviolet ray to form benzophenone, 2,4-di-tert-butylphenyl, 3,5-di-tert-butyl-4-hydroxybenzoate, and the like.
Needless to say, these ultraviolet absorbents may be used as a combination of two or more thereof in a predetermined ratio according to need.

As the antioxidant and antiaging agent, there may be, for example, 2,6-di-tert-butyl-4-methylphenol, 2,4,6-tri-tert-butylphenol, styrenized phenol, 2,2'-methylenebis(4-methyl-6-tert-butylphenol), 4,4'-isopropylidenebisphenol, 2,6-bis(2'-hydroxy-3'-tert-butyl-5'-methylbenzyl)-4-methylphenol, 4,4'-thiobis-(3-methyl-6-tert-butylphenol), tetrakis-{methylene(3,5-di-tert-butyl-4-hydroxyhydrocinnamate)}methane, p-hydroxyphenyl-3-naphthylamine, 2,2,4-trimethyl-1,2-dihydroquinoline, thiobis(β-naphthol), mercaptobenzothiazole, mercaptobenzimidazole, aldol-2-naphthylamine, bis(2,2,6,6-tetramethyl-4-piperidyl)cebacate, 2,2,6,6-tetramethyl-4-piperidyl benzoate, dilauryl-3,3'-thiodipropionate, distearyl-3,3'-thiodipropionate, tris(4-nonylphenylphenol)phosphite, and the like. Needless to say, these materials may be used as a combination of two or more thereof in a predetermined ratio according to need.

As the quencher of singlet oxygen, there are, for example, carotenes, dyes, amines, phenols, nickel complexes, sulfides, and the like and may be, for example, mentioned 1,4-diazabicyclo(2,2,2)octane, β-carotene, 1,3-cyclohexadiene, 2-diethylaminomethylfuran, 2-phenylaminomethylfuran, 9-diethylaminomethylanthracene, 5-diethylaminomethyl-6-phenyl-3,4-dihydroxypyran, nickel dimethyldithiocarbamate, nickel dibutyldithiocarbamate, nickel 3,5-di-t-butyl-4-hydroxybenzyl-o-ethyl phosphonate, nickel 3,5-di-t-butyl-4-hydroxybenzyl-o-butyl phosphonate, nickel {2,2'-thiobis(4-t-octylphenolate)}(n-butylamine), nickel {2,2'-thiobis(4-t-octylphenolate)}(n-ethylhexylamine), nickel bis(2,2'-thiobis(4-t-octylphenolate)}, nickel bis{2,2'-sulfonebis(4-octylphenolate)}, nickel bis(2-hydroxy-5-methoxyphenyl-N-n-butylaldoimine), nickel bis(dithiobenzyl), nickel bis(dithiobiacetyl), and the like. Needless to say, these materials may be used as a combination of two or more thereof in a predetermined ratio according to need.

Moreover, it may comprise components other than the above within the range where various performances such as a recording property, visibility, and recording sensitivity of the thermal printing layer are not impaired.
The optional components such as waxes and various additives explained above may be used singly or two or more kinds thereof may be used in combination. Moreover, the total amount of the above additives is usually 5 parts by weight or more and 500 parts by weight or less based on 100 parts by weight of the heat-sensitive color development material.

### (Film thickness)

A film thickness of the thermal printing layer is usually 1 µm or more, preferably 2 µm or more, more preferably 3 µm or more. By regulating it within the above range, the sensitivity at thermal printing is easily secured.
On the other hand, the film thickness of the thermal printing layer is usually 50 µm or less, preferably 30 µm or less, more preferably 25 µm or less, further preferably 20 µm or less, particularly preferably 10 µm or less. By controlling it within the above range, heat is easily transmitted at thermal printing and thus a heat efficiency is easily secured.

### (Production method)

A composition for forming the thermal printing layer commonly has a liquid form having a predetermined viscosity (ink state) before curing. Therefore, the thermal printing layer is usually produced by the following method.
First, a coating liquid comprising a heat-sensitive color development material, a developer, a curable resin, and predetermined additives according to need is prepared. On this occasion, the sensitive color development material, the developer, and the predetermined additives may be dissolved in the coating liquid.
Then, the above ink is applied by spin coating, bar coating, blade coating, air-knife coating, roll coating, spray coating, screen printing, or the like. Thereafter, the applied film is cured.

In the above production example, the thermal printing layer is cured as a single layer but the invention is not limited to the above production example. For example, other layer(s) may be applied beneath or on the thermal printing layer and a plurality of these layers may be cured collectively.
Among the above application methods, screen printing is preferred because of easy control of the thickness, a small amount of ink to be used, and high productivity. Moreover, for curing the thermal printing layer, heat or light is usually employed but preferably light is employed. Further preferably, it is cured with an ultraviolet ray. By using light, high productivity is easily secured, an influence of warpage of the color former layer is easily suppressed, and further an evenness of the film thickness of the color former layer is easily maintained.

As an ultraviolet irradiation source, a mercury lamp, a high-pressure mercury lamp, an ultrahigh-pressure mercury lamp, a metal halide lamp, or the like is used. An irradiation energy amount is usually 150 mJ/cm² or more, preferably 250 mJ/cm² or more. On the other hand, the irradiation energy amount is usually 2000 mJ/cm² or less, preferably 1500 mJ/cm² or less.

### (Surface hardness of thermal printing layer)

In the present embodiment, it is desired that the thermal printing layer is hardly scratched even when the thermal head is slid on the thermal printing layer at thermal printing. Moreover, at thermal printing, it is desired that the thermal head can be smoothly slid on the thermal printing layer. For the purpose, in the present embodiment, it is preferred to secure a surface hardness of the thermal printing layer. The desired surface hardness is easily achieved by increasing the elastic modulus of the thermal printing layer at 30°C.

Herein, the surface hardness of the thermal printing layer can be quantitatively determined, for example, by measuring a pencil hardness of the surface of the thermal printing layer. The pencil hardness is determined in accordance with JIS-K 5600-5-4 (provided that the load is suitably controlled) by scratching the surface of the thermal printing layer with a pencil and representing, as hardness, "HB", "2H", or the like defined for the pencil that is a limit for getting a bruise.

The pencil hardness of the thermal printing layer is usually 2H or more, preferably 3H or more in consideration of the contact with the thermal head. On the other hand, when the surface hardness of the thermal printing layer is excessively large, the color development sensitivity at thermal printing tends to be lowered in some cases, so that an upper limit of the pencil hardness is usually 6H or less.

### (2) Base material

Generally, the thermal printing layer is provided on any base material and then used. As the base material, any material which enables printing on the heat-sensitive layer may be used and the base material is not particularly limited. As the base material, there may be, for example, mentioned papers (labels, tickets, etc.), OHP sheets (stretched films made of polyethylene terephthalate), plastic cards (ID cards, credit cards, etc.), optically recordable recording media (CD-R, CD-RW, recordable DVD, rewritable DVD, blue-laser capacitated optical recording media, etc.). Moreover, the base material is not limited to a plane-form one and may be a resin molded article (injection molded article or the like), a metal processed article, or the like.
Of these, from the viewpoint of industrially high needs, an optically recordable recording medium is suitably employed as the base material. Thus, the following will explain the case where an optically recordable recording medium is used as a base material and the thermal printing layer is provided on the base material.

The optical recording medium of the invention comprises the above thermal printing layer and a recording/reading functional layer where recording or reading is performed with a light. Moreover, it has the above thermal printing layer on a side of the recording/reading functional layer in which the side is opposite to a side on which the light enters.

The recording/reading functional layer can adopt a layer constitution according to each purpose of the case of read-only media (ROM media), the case of recordable media on which recording is possible only once (Write Once media), or the case of rewritable media on which recording/erasing can be conducted repeatedly (ReWritable media). Moreover, the recording/reading functional layer can be classified into a substrate side-incident type and a film side-incident type depending on the incident direction of a recording/reading light.

### (Example of read-only media)

In the case of the read-only media, the recording/reading functional layer usually has a substrate where a pit having a predetermined size, and a reflective layer and a protective layer formed on the substrate. As a material for the reflective layer, a metal such as Al, Ag, or Au or an alloy thereof is usually employed. As a material for the protective layer, an ultraviolet curable resin or the like is usually used. Moreover, as the protective layer, a plate-form member made of a resin such as polycarbonate or made of a metal is employed in some cases. In the case of the read-only media, the layer constitution is the same even when it is the substrate side-incident type or the film side-incident type.
In the case of the read-only media, the recording/reading functional layer is formed by forming a reflective layer on the substrate by a sputtering method and then forming a protective layer through curing an ultraviolet curable resin applied on the reflective layer.
Moreover, in the case where a plate-form member is used as the protective layer, the plate-form member is adhered on the reflective layer with an adhesive.

### (Example 1 of recordable media)

In the recordable media of the film side-incident type, the recording/reading functional layer is usually obtained by providing a reflective layer, a recording layer, and a protective layer on a substrate in this order. Herein, a buffer layer formed with an inorganic material (e.g., ZnS/SiO₂) between the recording layer and the protective layer may be provided.
On the other hand, in the recordable media of the substrate side-incident type, the recording/reading functional layer is usually obtained by providing a recording layer, a reflective layer, and a protective layer on a substrate in this order.

As a material for the reflective layer, a metal such as Al, Ag, or Au or an alloy thereof is usually employed. As a material for the protective layer, an ultraviolet curable resin is usually used. Moreover, as the protective layer, a plate-form member of a resin (e.g., polycarbonate), a metal, or the like is employed in some cases. A formation method of the reflective layer and protective layer is as in the case of the read-only media. In the case where a plate-form member of a resin (e.g., polycarbonate), a metal, or the like is employed for the protective layer, the member is adhered on the recording layer, the buffer layer, or the reflective layer with an adhesive.

As a material for the recording layer in the above recordable media, an organic dye is usually used. As such an organic dye, there may be mentioned macrocyclic azaanulene-based dyes (phthalocyanine dye, naphthalocyanine dye, porphyrin dye, etc.), polymethine-based dyes (cyanine dye, merocyanine dye, squalirium dye, etc.), anthraquinone-based dyes, azurenium-based dyes, metal-containing azo-based dyes, metal-containing indoaniline-based dyes, and the like. In particular, metal-containing azo-based dyes are preferred since they tend to be excellent in durability.

In the case of forming the recording layer with an organic dye, the layer is usually formed by an application method such as spin coating, spray coating, dip coating, or roll coating with a solution obtained by dissolving an organic dye in an appropriate solvent.
On this occasion, as the solvent, there is suitably used a ketone alcohol solvent such as diacetone alcohol or 3-hydroxy-3-methyl-2-butanone, a cellosolve solvent such as methyl cellosolve or ethyl cellosolve, a perfluoroalkyl alcohol solvent such as tetrafluoropropanol or octafluoropentanol, or a hydroxyethyl solvent such as methyl lactate or methyl isobutyrate.

The thickness of the recording layer is not particularly limited since suitable film thickness varies depending on the recording method and the like. In order to obtain a sufficient modulation, the thickness is usually 1 nm or more, preferably 5 nm or more, particularly preferably 10 nm or more. However, since it is necessary to transmit a light, the thickness of the recording layer is usually 3 µm or less, preferably 1 µm or less, more preferably 200 nm or less, further preferably 100 µm or less.

### (Example 2 of recordable media)

In another specific example of the recordable media of the film side-incident type, the recording/reading functional layer is usually obtained by providing a reflective layer, a dielectric layer, a recording layer, a dielectric layer, and a protective layer on a substrate in this order. On the other hand, in another specific example of the recordable media of the substrate side-incident type, the recording/reading functional layer is usually obtained by providing a dielectric layer, a recording layer, a dielectric layer, a reflective layer, and a protective layer on a substrate in this order.

As a material for the reflective layer, a metal such as Al, Ag, or Au or an alloy thereof is usually employed. As a material for the protective layer, an ultraviolet curable resin or the like is usually used. Moreover, as the protective layer, a plate-form member of a resin (e.g., polycarbonate), a metal, or the like is employed in some cases. A formation method of the reflective layer and the protective layer is as in the case of the read-only media.
As a material for the dielectric layer, an inorganic material (representatively, ZnS/SiO₂ or GeCrN) is usually used.
The thickness of the dielectric layer is usually 0.5 nm or more and usually 50 nm or less. The dielectric layer may be formed by laminating a plurality of different inorganic materials according to need (e.g., may be a laminated structure of a ZnS/SiO₂ layer and a GeCrN layer).
The dielectric layer is usually formed by spattering.

For the recording layer, an inorganic material (e.g., a chalcogen-based alloy such as Ge-Te or Ge-Sb-Te, a bilayer film such as Si/Ge or Al/Sb, a (partial) nitride film such as BiGeN or SnNbN, or a (partial) oxide film such as TeOx or BiFOx) is used. The recording layer is usually formed by sputtering. The thickness of the recording film is usually about 1 nm to 50 nm.

### (Example 1 of rewritable media)

In the rewritable media of the film side-incident type, the recording/reading functional layer is usually obtained by providing a reflective layer, a dielectric layer, a recording layer, a dielectric layer, and a protective layer on a substrate in this order. On the other hand, in the rewritable media of the substrate side-incident type, the recording/reading functional layer is usually obtained by providing a dielectric layer, a recording layer, a dielectric layer, a reflective layer, and a protective layer on a substrate in this order.

The reflective layer, dielectric layer, recording layer, and protective layer are the same as in the above example 2 of the recordable media. However, the recording layer is necessarily made of a material capable of recording and erasing reversibly. As such a material, there may be, for example, mentioned materials such as SbTe-based, GeTe-based, GeSbTe-based, InSbTe-based, AgSbTe-based, AgInSbTe-based, GeSb-based, GeSbSn-based, InGeSbTe-based, InGeSbSnTe-based ones.

### (Example 2 of rewritable media)

As another specific example of the rewritable media, magneto optical recording media (MO disks) may be mentioned.

### (Common items)

As a material for the substrate on which the recording/reading functional layer is formed, there may be usually mentioned plastics, metals, glass, and the like, which possess appropriate workability and rigidity. In the case where the optical recording medium is a substrate side-incident type, a light-transmitting material having transmitting ability to a recording/reading light is used as a material for the substrate. On the other hand, in the optical recording medium of a film side-incident type, the substrate may not be transparent with respect to an entering laser light. As the plastic material, there may be, for example, mentioned polycarbonate resins, polyolefin resins, acrylic resins, epoxy resins, and the like.

The thickness of the substrate is preferably about 0.5 mm to 1.2 mm. In the case of CD type media, a substrate having a thickness of 1.2 mm is usually used. Moreover, in the case of DVD type media, a substrate having a thickness of 0.6 mm where a predetermined pit or guide groove for tracking are formed on the surface is used and a dummy substrate having a thickness of 0.6 mm is attached thereto, thereby being prepared.

On the substrate surface, a guide groove for tracking having a predetermined track pitch is formed. The track pitch varies depending on a wavelength of a recording/reading light and, in the CD type optical recording media, it is usually 1.5 µm to 1.6 µm. Moreover, in the DVD type optical recording media, it is usually 0.7 µm to 0.8 µm. In the optical recording media for blue laser, it is usually 0.2 µm to 0.5 µm. A groove depth of the guide groove for tracking is usually 10 nm to 300 nm in the CD type optical recording media. It is usually 10 nm to 200 nm in the DVD type optical recording media. It is usually 10 nm to 200 nm in the optical recording media for blue laser.

With regard to the substrate, in the case of using a plastic material, the disk-shaped shape and the surface guide groove are formed in one step by injection molding or the like. In the case of using a metal, glass, or the like, the groove is formed on a light-curable or heat-curable thin resin layer which is provided on the surface.
Moreover, on the recording/reading functional layer, a recording/reading region is defined. In the case where the recording/reading functional layer is a plate cyclic shaped one having a central hole, the recording/reading region is defined within the range of an inner diameter larger than the diameter of inner circumference and an outer diameter smaller than the diameter of outer circumference.

### (Others)

In the above "Example of read-only media", "Example 1 of recordable media", "Example 2 of recordable media", and "Example 1 of rewritable media,", from the viewpoint of increasing recording capacity, a plurality of recording layers may be provided. In the case where a plurality of recording layers are provided, the number of the recording layers are usually two or more layers, preferably three or more layers in consideration of the recording capacity. On the other hand, the number of the recording layers is usually ten or less layers, preferably five or less layers.

### (3) Thermal printing method and apparatus

The thermal printing can be performed with a thermal head by known methods. A specific method of the thermal printing is, for example, as described in JP-A-2000-155989.
Usually, the thermal printing is performed by bringing the thermal head into contact with or proximity to the thermal printing layer and moving it relatively. The thermal head and the thermal printing layer may be in contact or non-contact with each other. In the case where the shape of the thermal printing layer or the optical recording medium on which the thermal printing layer is provided is a circular flat plate (disk shape), it is preferred to print it with rotating the thermal printing layer and moving the thermal head in a radial direction of the thermal printing layer.

The thermal head is not limited and a thin-film thermal head, a laser type thermal head, an LED type thermal head, or the like can be used. Of these, the laser type thermal head and an LED type thermal head are preferred. This is because printing is possible with no contact of the thermal head with the thermal printing layer, dust generation and head smearing do not occur, cleaning of the heat-sensitive head is unnecessary, and hence maintenance becomes easy. Furthermore, since printing is possible with no contact, there is an advantage that printing is possible even when a surface of the thermal printing layer is uneven.
Moreover, at an opposite side to the thermal head beyond the thermal printing layer or the optical recording medium on which the thermal printing layer is provided, a back-up roller is preferably provided. The back-up roller is a roller supporting the thermal printing layer from the backside against a pressing force from the surface induced by the thermal head. When the back-up roller is provided, the pressing force of the thermal head is made even and a high-quality printed image having a print concentration with little unevenness can be obtained. Thus, it is particularly suitable in the case where the above disk shaped thermal printing layer is printed.

The apparatus for use in the thermal printing is not limited and various types of known thermal printing apparatus can be applied.
Moreover, when a thermal head is installed into an optical recording apparatus, it becomes possible to perform recording and/or reading with a light onto the recording/reading functional layer and printing (printmaking) with heat onto the thermal printing layer within the same apparatus. Furthermore, it is also possible to perform these different movements at the same time. The optical recording medium of the invention can be used in the case where it is applied to such an apparatus.

The printing on the printing layer with a thermal head has an advantage that a necessary space may be small in the apparatus as compared with the printing by an inkjet and further an advantage that consumption articles such as ink cartridges are not generated. Moreover, there is an advantage that the printing can be performed within a short time as compared with the printing on the printing layer with a laser light. Furthermore, in the case of the printing on the printing layer with a laser light, it is unrealistic in view of space to provide individual laser-irradiating parts at both sides with respect to the medium. Therefore, the laser-irradiating part is provided at one side with respect to the medium. In that case, not only it is impossible to achieve recording on the printing layer and recording on the recording/reading functional layer present at the backside of the printing layer at the same time but also the optical recording medium should be inverted.
As above, the optical recording medium of the invention can provide, for example, an optical recording medium to be suitably used in a DVD recorder and the like into which a thermal head is installed.

### Examples

The following will explain the invention further specifically with reference to Examples. The invention is not limited to the following Examples unless it departs from the gist.

### (Examples 1, 2 and Comparative Example 1)

Coating liquids having compositions shown in Table 1 were prepared. Then, each of the coating liquids was applied onto a polyethylene terephthalate (PET) film by means of a doctor blade (manufactured by Tester Sangyo Co., Ltd.) having a gap of 7 µm. Thereafter, they were irradiated with an ultraviolet ray (1200 mJ/cm²) through a quartz glass under a nitrogen atmosphere to be cured, thereby a thermal printing layer being obtained. A pencil hardness of the resulting thermal printing layer was measured. The results were also described in Table 1.
Furthermore, recording by a heat-sensitive printer (Panasonic Digital Photo Printer NV-AP1 manufactured by Matsushita Electric Industrial Co., Ltd.) was attempted on the above thermal printing layer. On this occasion, a PET film was inserted between an ink ribbon and the thermal printing layer. This is done for the purpose of no attachment of the ink on the ink ribbon onto the thermal printing layer. The evaluation results on printing ability were also described in Table 1.

**[Table 1]**

| Mixing amount (g) | | | | Example | | Comp. Example |
|---|---|---|---|---|---|---|
| | | | | 1 | 2 | 1 |
| Coating liquid | Acrylic resin A | Elastic modulus (30°C, Pa) | 2000 | 5 | | |
| | | Elastic modulus (150°C, Pa) | 60 | | | |
| | | Tg (°C) | 82 | | | |
| | Acrylic resin B | Elastic modulus (30°C, Pa) | 3400 | | 5 | |
| | | Elastic modulus (150°C, Pa) | 1050 | | | |
| | | Tg (°C) | 181 | | | |
| | Acrylic resin C | Elastic modulus (30°C, Pa) | 680 | | | 5 |
| | | Elastic modulus (100°C, Pa) | 20 | | | |
| | | Tg (°C) | 50 | | | |
| | Photo-polymerization initiator | Irgacure 1300 | | 0.5 | 0.5 | 0.5 |
| | Heat-sensitive color development material | BK 400 | | 2 | 2 | 2 |
| | Developer | D-8 | | 1.5 | 1.5 | 1.5 |
| Thermal printing layer | Pencil hardness | | | 3H | 2H to 3H | HB to H |
| | Printing ability | Color development | | A | B | A |
| | | Stability | | A | A | C |

### (Acrylic resins A, B, C)

They are manufactured by Dainippon Ink And Chemicals, Incorporated. Each of the above acrylic resins A to C has obtained desired elastic modulus by controlling the monomer structure (crosslinked structure) by suitably mixing an acrylic monomer which achieves a high crosslinking density, an acrylic monomer having a rigid structure in the crosslinked structure, an acrylic monomer which achieves a small crosslinking density, and the other monomer(s). With regard to the acrylic resin C, the elastic modulus at 100°C is 20 Pa. Therefore, it is anticipated that the elastic modulus at 150°C would be a value smaller than 20 Pa.
(Irgacure 1300)
   A light cleavage type, manufactured by Ciba Specialty Chemicals Inc.
(By 400)
   3-dibutylamino-6-methyl-7-anilinofluoran
(D-8)
   [4-hydroxy-4'-(isopropyloxy)diphenyl sulfone]

### (Pencil hardness)

It was determined in accordance with JIS-K 5600-5-4 (provided that load was 200 g) by scratching the surface of the thermal printing layer with pencils and representing, as hardness, "HB", "2H", or the like defined for the pencil that is a limit for getting a bruise.

### (Printing ability/color development)

It was evaluated on the basis of the following criteria.
A: the thermal printing layer was well colored black (color-developed).
B: the layer was well colored black (color-developed) but the concentration of the color development was slightly poorer than that in Example 1.
C: No good black color development was observed or the concentration of the black color development was remarkably poor as compared with the case of Example 1.

### (Printing ability/stability)

After being allowed to stand under an environment of 65°C/80% for 24 hours, the colored part was observed and evaluated on the basis of the following criteria.
A: it was sufficiently stable.
B: decrease in concentration of the colored part was confirmed as compared with the case of Example 1.
C: decrease in concentration of the colored part was remarkable as compared with the case of Example 1.

From the results of Table 1, the thermal printing layer comprising a heat-sensitive color development material, a developer, and a curable resin and having an elastic modulus of 1000 Pa or more at 30°C and an elastic modulus of 1100 Pa or less at 150°C (Example 1) was a thermal printing layer having all of good scratch resistance, good color development sensitivity, and good printing stability.
The thermal printing layer of Example 2 has good scratch resistance and good printing stability but the color development sensitivity was slightly poor. It is expected that the color development sensitivity would be improved by changing the materials used for the heat-sensitive color development material and the developer. However, from the results of Example 2, in order to obtain an actually usable thermal printing layer, it is presumed that the elastic modulus of the curable resin at 150°C should be regulated to 1100 Pa or less. Moreover, when it is considered that the color development sensitivity of Example 2 is slightly poorer than that in Example 1, it is expected that the color development sensitivity can be more surely secured when the elastic modulus of the curable resin at 150°C is regulated to 1000 Pa or less.
On the other hand, the thermal printing layer of Comparative Example 1 wherein the elastic modulus at 30°C is less than 1000 Pa is satisfactory in color development sensitivity but is poor in printing stability. Moreover, the pencil hardness was obviously poorer than that in Examples 1 and 2 and also the scratch resistance was insufficient.

### (Example 3)

The coating liquid used in Example 1 was screenprinted on the label side of a DVD-R disk (manufactured by Mitsubishi Kagaku Media Co., Ltd.) by means of a calendered #460-27 screen. Then, the coating liquid was cured by irradiation with an ultraviolet ray (600 mJ/cm²). Thus, a thermal printing layer having a thickness of 5 µm was obtained. Six pieces of such a DVD-R disk were prepared.
Then, thermal printing was performed on the above thermal printing layer by means of a printer (RIMAGE Perfect Image MODEL: CDPR11, CDPR) manufactured by RIMAGE. The thermal printing was performed so that the thermal head was brought into direct contact with the thermal printing layer with removing an ink ribbon. The movement of the thermal head at the thermal printing was observed on individual disks.
As a result, of six pieces of the DVD-R disks, there were four disks on which sliding of the thermal head was almost stopped and there were two disks on which sliding of the thermal head was satisfactorily achieved. However, the thermal head was not completely stopped on all the disks and the black color development itself was achieved without problem. In addition, the color development sensitivity was also satisfactory.

### (Example 4)

A thermal printing layer was obtained in the same manner as in Example 3 except that the coating liquid was changed to the coating liquid used in Example 2 and the prepared DVD-R disk was two pieces. Then, the resulting thermal printing layer was subjected to thermal printing as in Example 3.
As a result, the sliding of the thermal head was satisfactorily achieved for all of the two pieces of the DVD-R disk. However, the color development sensitivity was slightly poorer than that in Example 3.

### (Comparative Example 2)

A thermal printing layer was obtained in the same manner as in Example 3 except that the coating liquid was changed to the coating liquid used in Comparative Example 1 and the prepared DVD-R disk was three pieces. Then, the resulting thermal printing layer was subjected to thermal printing as in Example 3.
As a result, the sliding of the thermal head was not satisfactorily achieved on the thermal printing layer for all of the three pieces of the DVD-R disk (the thermal head was stopped on the way and printing of the whole surface of the thermal printing layer was not completed). It is considered that this is because the surface of the thermal printing layer becomes soft due to low elastic modulus of the acrylic resin C at 30°C and as a result, the thermal head is apt to get stuck on the thermal printing layer during the sliding of the thermal head.
While the invention has been described in detail and with reference to specific examples thereof, it will be apparent to one skilled in the art that various changes and modifications can be made therein without departing from the spirit and scope thereof.
The present application is based on Japanese Patent Application No. 2006-110394 filed on April 13, 2006, and the contents are incorporated herein by reference.

### Industrial Applicability

The present invention can provide a thermal printing layer capable of thermal printing with a thermal head and excellent in scratch resistance and further, can provide an optical recording medium using a curable resin, capable of thermal printing with a thermal head, and having a thermal printing layer excellent in scratch resistance.

## Claims

1. A thermal printing layer capable of thermal printing with a thermal head, which comprises a heat-sensitive color development material, a developer, and a curable resin,
wherein the curable resin has an elastic modulus of 1000 Pa or more at 30°C and an elastic modulus of 1100 Pa or less at 150°C.

2. The thermal printing layer according to claim 1, wherein the curable resin has an elastic modulus of 2000 Pa or more at 30°C.

3. The thermal printing layer according to claim 1 or 2, wherein the curable resin has a glass transition temperature (Tg) of 60°C or higher.

4. The thermal printing layer according to any one of claims 1 to 3, which further comprises a sensitizer.

5. The thermal printing layer according to any one of claims 1 to 4, wherein the curable resin is an ultraviolet curable resin.

6. An optical recording medium comprising the thermal printing layer according to any one of claims 1 to 5 and a recording/reading functional layer for performing recording or reading with a light,
wherein the optical recording medium has the thermal printing layer on a side of the recording/reading functional layer in which the side is opposite to a side on which the light enters.
